# EUROPÄISCHE PATENTSCHRIFT

(11) **EP 0 752 459 B1**
(45) Veröffentlichungstag und Bekanntmachung des Hinweises auf die Patenterteilung: **24.11.1999**
(21) Anmeldenummer: 96890112.4
(22) Anmeldetag: 01.07.1996
(51) Int. Cl.: C10G 33/06, B01D 17/032, B01D 17/035

(54) **Verfahren und Vorrichtung zum Abtrennen einer hydrophoben flüssigen Fraktion aus einer wässrigen Suspension**
Process and device for separating a hydrophobic liquid fraction from an aqueous suspension
Procédé et dispositif pour séparer une fraction liquide hydrophobe d'une suspension aqueuse

(30) Priorität: 03.07.1995 AT 112895
(43) Veröffentlichungstag der Anmeldung: 08.01.1997
(73) Patentinhaber: OMV Aktiengesellschaft, 1090 Wien (AT)
(72) Erfinder: Weihs, Kurt, Ing., 2263 Dürnkrut (AT)
(74) Vertreter: Widtmann, Georg, Dipl.-Ing. Dr. techn.

(56) Entgegenhaltungen:
- US-A- 1 703 041
- US-A- 4 851 123

## Beschreibung

Die Erfindung bezieht sich auf ein Verfahren zum Abtrennen einer hydrophoben flüssigen Fraktion aus einer wäßrigen Suspension sowie auf eine Vorrichtung zur Durchführung des Verfahrens.

Bei der Erschließung von Erdölfeldern sowie bei der Förderung von Erdöl fallen Mischungen aus feinteiligem Gcstcinsmehl, Sand und Körnern mit Erdöl und Wasser an. Diese Mischungen können langläufig als Schlamm bezeichnet werden und werden unterschiedlichen Behandlungen zugeführt. Einc derartige Mischung weist ein charakteristisches Verhältnis von Feststoffen zu Erdöl in (iewichtsteilen von 1,5 bis 1,7 auf. Rest der Mischung ist Wasser, wobei ein relativ hoher (iehalt an Erdölprodukten von zumindest 8 Gew.-% vorliegt. Derartige Schlämme, die als Suspensionen zu bezeichnen sind, enthalten bis zu 40 Gew.-% an einer hydrophoben flüssigen Fraktion, z. B. Erdöl.

In den Vereinigten Staaten von Amerika wurden früher derartige Schlämme, um den Gesamtgehalt an Erdölen zu senken, mit landwirtschaftlich nutzbarer Erde vermischt, und es erfolgte durch aerobe Mikroorganismen ein Abbau der Erdölprodukte zu CO₂ und Eiweiß. Der Einsatz derartiger Verfahren war im wesentlichen auf Gebiete beschränkt, die lediglich geringere Mengen an Niederschlag aufwiesen, so daß keine Gefährdung des Grundwassers eintreten konnte.

Um die Gesamtmengen des bei Bohrspülung anfallenden Schlammes zu minimieren, wird derselbe nach Abtrennung von Grobanteilen, z. B. durch Siebe und Zentrifugen, rückgeführt. Geschlossene oder nahezu geschlossene Systeme sind besonders energie- und arbeitsaufwendig, so daß sie nur an besonderen Standorten zum Einsatz kommen.

Eine geübte Praxis zur Behandlung der Bohrschlämme besteht darin, dieselben in großcn Becken einer langsamen Trennung zwischen oleophilcn und hydrophilen Bestandteilen zu unterwerfen und gleichzeitig eine weitgehendste Abtrennung von Wasser zu erreichen. Hiebei wird derart vorgegangen, daß die Schlämme in Behälter, z. B. mehrfach abgedichtete und kontrollierte Becken eingebracht und mit Wasser, das gegebenenfalls von einer analogen Behandlung aus einem anderen Becken stammt, überschichtet werden. Es tritt hiebei eine schwerkraftsbedingte Sedimentation des Schlammes ein, wobei im Sediment selbst noch fein verteilt Erdölprodukte eingeschlossen sind. Auf Grund der Oberflächenspannung der Erdölprodukte bilden sich mit der Zeit größere Tropfen aus, die auf Grund des Unterschiedes im spezifischen Gewicht zu Wasser zur Oberfläche aufschwimmen. Derartiges Aufschwimmen wird noch weiters durch anaerobe Fermentation im Sediment unterstützt, wobei Grubengas entsteht, das auf Grund des besonders hohen Unterschiedes im spezifischen Gewicht zu Wasser leichter als die Erdöltröpfchen aufsteigen kann und damit Poren oder Kanäle bildet, entlang welcher die Erdölprodukte aufsteigen können. An der Oberfläche wird das Erdöl abgesaugt und sodann vom anhaftenden Wasser befreit und der industriellen Aufarbeitung von Erdöl zugeführt. Je nach Erfordernis kann eine derartige Lagerung über längere Zeiträume, beispielsweise Jahre, erfolgen, wobei eine immer langsamere Abscheidung der hydrophoben Phase im Schlamm bzw. in den Sedimenten erfolgt. Je nach den Erfordernissen kann sodann nach einer Analyse der durchschnittlichen Zusammensetzung der Sedimente ein Abzug des darüberstehenden Wassers durchgeführt werden und die Sedimente, welche in der Regel zumindest einen Gehalt von 15 Gew.-% an Erdölprodukten aufweisen, einer Sonderdeponie zugeführt werden. Derartige Sonderdeponien müssen besondere Erfordernisse erfüllen. So dürfen sie beispielsweise nicht mit dem Grundwasserspiegel in der Umgebung kommunizieren. Diese Bedingungen sind insbesondere von Salzbergwerken erfüllt, da derartige Salzablagerungen über Jahrtausende lediglich dadurch beständig waren, daß keine Verbindung zu Wasserquellen bestanden hat, die ein Auslaugen des Salzes in kürzerer Zeit bedingt hätten.

Die vorliegende Erfindung geht von dem oben angeführten Stand der Technik aus.

Ein weiterer Stand der Technik ist durch die US-A-4,851,123 gegeben, in welcher die Aufarbeitung eines Abfallstoffes aus einer Erdölraffinerie beschrieben wird, wobei derselbe 13 Gcw.-% Feststoffe, 8 Gew.-% Erdöl, Schmierfett u. dgl., Rest Wasser enthält. Eine derartige Mischung wird intensiv durchmischt, worauf die über dem Feststoff stehende Suspension dekantiert wird. Dem Dekantat wird eine Flotationsflüssigkeit zugesetzt, die schaumbildend ist, wonach Druckluft eingeleitet wird. Der sich an der Oberfläche ansammelnde Schaum enthält einen Großteil des im Schlamm vorliegenden Erdöls.

Ziel der vorliegenden Erfindung ist, ein Verfahren und eine Vorrichtung zum Abtrennen einer hydrophoben flüssigen Fraktion aus einer wäßrigen Suspcnsion zu schaffen, womit trotz geringem apparativen Aufwand sowie energetischen und personellen Einsatz eine Abtrennung der hydrophoben Phase aus einer Suspension durchgeführt werden kann, so daß dieselben einer für die Umwelt unbedenkliche Deponierung zuführbar ist bzw. besonders einfach einer natürlichen weiteren mikrobiologischen Abbaubarkeit unterliegt.

Das erfindungsgemäße Verfahren zum Abtrennen einer hydrophoben flüssigen Fraktion, insbesondere Erdöl oder Erdöldestillate, aus einer wäßrigen Suspension mit einem Gehalt an der hydrophoben flüssigen Fraktion von 10 Gew.-% bis 40 Gew.-%, insbesondere 15 Gew.-% bis 25 Gew.-%, gegebenenfalls 18 Gew.-% bis 22 Gew.-% und einer Sedimentfraktion, z. B. Gesteinsmehl von 25 Gew.-% bis 40 Gew.-%, wobei die wäßrige Suspension, gegebenenfalls unter Zusatz von Wasser, in einem Behälter, insbesondere einem Becken, gelagert, und von der Wasseroberfläche die hydrophobe flüssige Fraktion abgezogen wird, und der wäßrigen Suspension Wasser entzogen wird, besteht im wesentlichen darin, daß die Suspcnsion im Behälter wiederholt mit Wasser vermischt wird, und an der Wasseroberfläche die hydrophobe flüssige Fraktion abgezogen wird, worauf der einen geringeren Anteil an der hydrophoben flüssigen Fraktion aufweisenden Suspension Wasser entzogen wird, und gegebenenfalls der (iehalt an der hydrophoben flüssigen Fraktion in der Suspension weiter abgebaut wird.

Derartige wäßrige Suspensionen fallen innerhalb der Erdölindustric bei unterschiedlichen Verfahrensschritten an und haben ein typisches Verhältnis von Feststoffen zu Erdöl von 1,5 bis 1,7. So fallen derartige Zusammensetzungen beispielsweise bei der Erschließung von Erdölfeldern, sei es bei Richtbohrungen oder auch Förderbohrungen im Laufe der Förderung von Erdöl, Spülungen von Erdölsonden, aber auch im Betrieb während der Aufarbeitung von Erdöl, an. Die Sedimentfraktion, z. B. Gesteinsmehl, Erdölkoks oder aufgeschlämmtes Erdreich, ist durch Wasser in der Regel nicht mehr oder nicht im hohen Maße weiter extrahierbar, so daß diese inerte Substanz ohne Gefahr rückgeführt werden kann. Der Wasseranteil, welcher einer natürlichen Reduktion auf Grund der Verdampfung wegen des Dampfdruckes des Wassers sich laufend reduziert, kann im wesentlichen im Kreislauf für die Weiterbehandlung der Abfallstoffe eingesetzt werden. Lediglich der Schlammanteil, welcher einen zu hohen Gehalt an hydrophoben flüssigen Bestandteilen aufweist, muß einer weiteren Behandlung zugeführt werden. Auf Grund der überaus großen Mengen derartiger Schlammanteile ist nur eine möglichst einfache und mit geringem Arbeitsaufwand durchführbare Verfahrensweise denkbar. Derartige Schlämme können zwar thermisch inertisiert werden, jedoch ist der Gesamtaufwand an Energie und auch der nachgeschalteten Reinigung der Abgase so aufwendig, daß eine größere Umweltbelastung, beispielsweise durch Entsorgung der Filteraschen, Filterrückstände u. dgl., zu befürchten ist. Auch besteht die Möglichkeit, die Schlämme mit einem Gehalt an einer hydrophoben flüssigen Fraktion mit organischen Lösungsmitteln zu extrahieren, wobei dann die hydrophoben Bestandteile anschließend von den organischen Lösungsmitteln befreit werden müssen. Derartige Verfahren sind besonders aufwendig und können bei großen Mengen an anfallenden Suspensionen nicht zum Einsatz gelangen. Es war durchaus überraschend, daß mit an sich einfachen Verfahrensschritten, u. zw. die Suspension im Behälter wiederholt mit Wasser zu vermischen und anschließend die an der Wasseroberfläche aufschwimmenden hydrophoben flüssigen Fraktionen abzuziehen und am Endc der Verfahrensschritte eine Dehydration der Suspension durchzuführen, zu einer hohen Abtrennung des hydrophoben flüssigen Anteiles führen kann. Die so erhaltene im wesentlichen einen geringen Wassergehalt aufweisende krümelige Suspcnsion oder Rückstand der Suspcnsion kann auf Grund seines geringen Gehaltes an Kohlenwasserstoffen, beispielsweise mikrobiologisch, abgebaut werden.

Erfolgt das Vermischen der Suspension mit dem Wasser mit Gas-, insbesondere Luftstrahlen, so kann eine besonders gute Durchmischung erfolgen, wobei gleichzeitig durch die aufsteigenden Gasblasen, beispielsweise in der Suspension, Poren mit einem Mindestquerschnitt, der etwa den Gasblasen entspricht, entstehen, die zur weiteren Entmischung von den hydrophoben flüssigen Bestandteilen dienen können. Luft bietet weiters den Vorteil, daß eine Fermentation, beispielsweise fakultativ aerobe Fermentation, durchgeführt werden kann, wobei in der Regel ebenfalls als Stoffwechselprodukte Gase entstehen, die gemeinsam mit den hydrophoben flüssigen Bestandteilen an die Oberfläche des darübergelagerten Wassers aufsteigen können.

Wird das Gas, insbesondere die Luft, in die Suspension impulsartig, vorzugsweise mit einem Druck zwischen 5 bar bis 10 bar in einer Dauer, insbesondere von 1 bis 5 Sekunden eingeleitet, so kann auf Grund des unterschiedlichen Druckes eine besonders gute und einfache Durchmischung der Suspension mit Wasser erfolgen, wobei auf Grund der zeitlichen Limitierung eine Verschmelzung der oleophilen Tropfen erfolgen kann, so daß dieselben sich schneller vereinigen können und damit unbehindeter an die Oberfläche des Wassers aufschwimmen.

Wird Gas, insbesondere Luft, über Gasleitungen, die in und/oder unterhalb der Suspension angeordnet sind, eingeleitet, so kann eine einfache und strömungsmäßig günstige Ausbildung von Poren in der Suspension erfolgen, die auf Grund der Möglichkeit, daß das Gas auch nur mit geringem Überdruck austreten kann, eine Vereinigung der hydrophoben Tropfen in der Suspension begünstigt.

Wird das Gas, insbesondere die Luft, vor dem Einleiten, insbesondere auf 40° C bis 50° C, erwärmt, so ist dadurch der Auftrieb des Gases innerhalb der Suspension bzw. des Wassers erhöht, wobei gleichzeitig eine Erwärmung der Suspension und damit wesentliche Erhöhung der Fermentation der Mikroorganismen in der Suspension erreicht werden kann, wobei weiters die Oberflächenspannung der einzelnen oleophilen Tröpfchen innerhalb der Suspension herabgesetzt wird, so daß eine Vereinigung derselben und damit schnellerer Aufstieg an die Oberfläche bevorzugt herbeigeführt wird.

Wird das Gas, insbesondere die Luft, über entlang der Wasseroberfläche geführten Träger, vorzugsweise Flöße, in die Suspension eingeleitet, so kann selbst bei großen Behältern oder Becken eine erforderliche diskontinuierliche Zuführung der Gase erfolgen, wobei der konstruktive Aufwand besonders gering zu halten ist, so daß der erforderlichen Vermischung in allen Bereichen des Behälters bzw. Beckens auf besonders einfache Weise Rechnung getragen wird.

Wird die an die Wasseroberfläche aufschwimmende Suspcnsion in die am Boden des Behälters vorliegende Suspension, z. B. über eine Schlammpumpe, gegebenenfalls gemeinsam mit Luft, rückgeführt, so kann eine besonders hohe Auftrennung der Suspcnsion zwischen hydrophilen und hydrophoben Bestandteilen erfolgen, wobei gleichzeitig durch die wiedereingepreßte Suspension die Durchmischung erhöht wird.

Wird nach beendeter Abtrennung der hydrophoben flüssigen Fraktion das Wasser, insbesondere über unterhalb der Suspension angeordneten Flüssigkeitsleitungen, abgezogen, so kann eine besonders wirkungsvolle Befreiung der Suspension von Wasser durchgeführt werden, womit das Gesamtgewicht der für eine Nachbehandlung zu unterwerfenden Fraktion besonders gering gehalten werden kann, wobei gleichzeitig ein vorteilhafter Wasserhaushalt gewährleistet ist.

Wird die Suspension, von welcher Wasser abgezogen wurde, zu Mieten aufgelegt, welche, insbesondere mechanisch, gewendet werden, so kann eine aerobe Fermentation der bereits teilweise getrockneten Suspension durchgeführt werden, wobei auf herkömmliche Technologien, wie beispielsweise Wenden der Mieten durch mechanische Vorrichtungen, Lagern der Mieten auf wasserundurchlässigen Auflagern oder Boden, rückgegriffen werden kann.

Wird die Suspension, von welcher Wasser abgezogen wurde, mit strukturierenden Materialien, z. B. Stroh oder Rinden, vermischt, so kann ein besonders einfacher Zutritt von sauerstoffhältiger Luft gewährleistet sein, wobei weiters ein Entweichen der Stoffwechselprodukte, beispielsweise CO₂ und Grubengase, auf Grund der vorhandenen Strukturen besonders einfach und wirksam durchgeführt wird.

Wird die Suspension mit Mikroorganismen, insbesondere Trägersubstrate, von Mikroorganismen, z. B. hölzerne Bohrplatten von Förderanlagen, vermischt, welche Mikroorganismen die flüssigen hydrophoben Substanzen abbauen, so kann eine bevorzugte Zersetzung des spezifischen Erdöles erreicht werden, wobei in der Regel die auf diese speziellen Kohlenwasserstoffe spezialisierten Mikroorganismen zum Einsatz kommen können.

Eine besonders vorteilhafte Ausführungsform besteht darin, daß die Suspension mit Grünschnitt, z. B. von Gras, Sträuchern, vermischt wird. Grünschnitt weist in der Regel thermophile Mikroorganismen auf, die für eine beschleunigte Zersetzung desselben bei höheren Temperaturen Rechnung tragen. Damit kann einerseits eine bevorzugte Trocknung des Substrates durchgeführt werden, wobei weiters auf Grund der erhöhten Temperatur eine beschleunigte Zersetzung der oleophilen Bestandteile durch dieselben abbauenden Mikroorganismen Rechnung getragen werden kann, unter der Voraussetzung, daß lediglich Inselbereiche, u. zw. die, die an das Grünmaterial anschließen, die erhöhten Temperaturen von 60° C bis 70° C aufweisen.

Werden der Suspension Stickstoffquellen zugemischt, so ist dem Überangebot an Kohlenstoff bezüglich des Abbaues durch Mikroorganismcn und Aufbau körpereigener Substanz auf besonders vorteilhafte Weise Rechnung getragen.

Der erfindungsgemäßen Vorrichtung liegt als Aufgabe zugrunde, eine Vorrichtung zur umweltschonenden Aufarbeitung von erdölhältigen Substanzen zu schaffen, die geeignet ist, große Volumina aufzunehmen und erlaubt, mit geringem arbeitsmäßigen und energetischen Einsatz große Mengen an mit hydrophoben Substanzen kontaminierten Suspensionen aufzuarbeiten.

Die erfindungsgemäße Vorrichtung zur Abtrennung einer hydrophoben flüssigen Fraktion, insbesondere Erdöl oder Erdöldestillate, aus einer wäßrigen Suspension mit einem Becken, das zumindest eine wasserdichte Schicht mit Lehm oder Kunststoff aufweist, welche eine Beschichtung mit Schotter und/oder Kies und eine Oberflächenschichtabzugseinrichtung aufweist, besteht im wesentlichen darin, daß im Schotter und/oder Kies eine Flüssigkeitsabzugsleitung und/oder eine Gaszuführleitung angeordnet ist. Eine derartige Vorrichtung ist geeignet, auf besonders einfache und umweltschonende Weise eine Lagerung von Erdölprodukte enthaltende Suspensionen zu ermöglichen, wobei gegebenenfalls der Flüssigkeitsabzug, also der Abzug von Wasser aus dem Substrat, einfach ermöglicht ist, und die Gaszufuhr, welche für die Vereinigung der Erdöltröpfchen Sorge trägt, besonders einfach durchgeführt werden kann.

Ist ein Floß vorgesehen, welches entlang der Wasseroberfläche bewegbar ist und eine Gasinjektionseinrichtung und/oder eine Schlammpumpeinrichtung trägt, so kann ohne hohen apparativen Aufwand eine über den gesamten Behälter verteilte Durchmischung der Suspension mit Wasser erfolgen, wobei weiters durch die Umwälzung des Schlammes eine tiefere Beaufschlagung der am Boden vorliegenden Suspension ermöglicht ist und der an die Oberfläche aufschwimmende Schlamm zur Zerteilung in die Suspension rückgeführt und zur Vereinigung mit anderen oleophilen Tröpfchen der Suspension beaufschlagt wird.

Weist die Gasinjektionseinrichtung einen Druckkessel für das Gas auf, so können größere Gasmengen unter hohem Druck in kurzer Zeit abgegeben werden, die für eine besonders gute Durchmischung der Suspension mit Wasser Sorge tragen.

Weist die Schlammpumpeinrichtung ein Absaugung auf, die wasseroberflächennahe mündet, so kann besonders einfach eine aufschwimmende Suspension, die beispielsweise Gasteilchen enthalten, in die am Boden befindliche Suspension rückgeführt werden.

Im folgenden wird die Erfindung anhand der Zeichnungen und Beispiele nächer erläutert.

Es zeigen:
Fig. 1 einen Querschnitt durch ein Becken und
Fig. 2 einen Querschnitt zwischen zwei nebeneinanderliegenden Mieten.

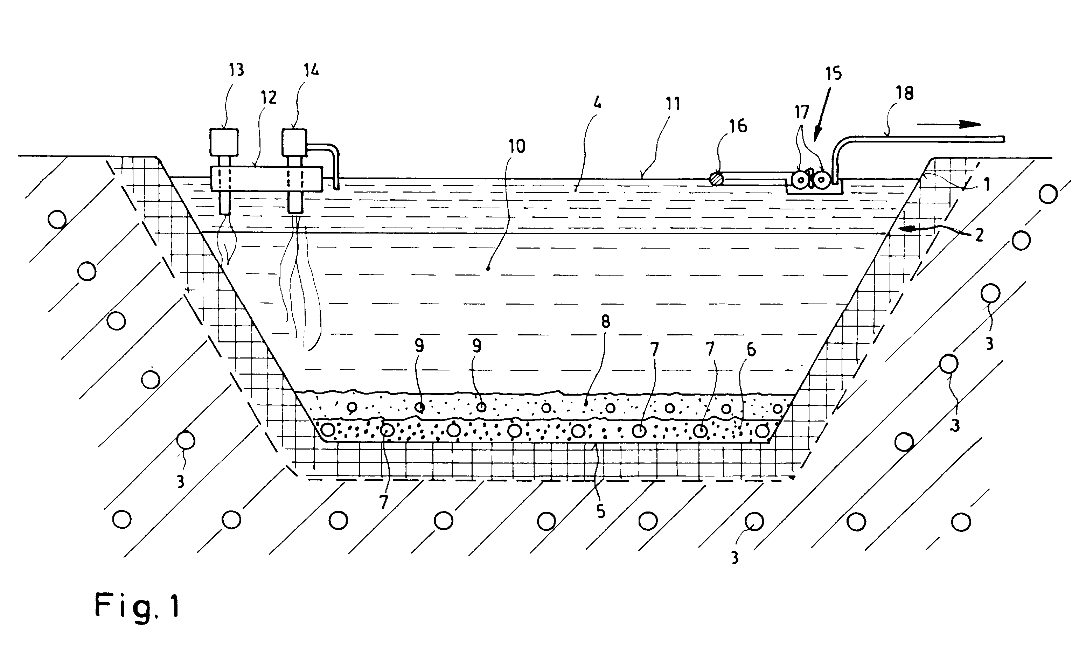

Das in Fig. 1 gezeigte Becken weist eine Folie 1 aus Kunststoff auf, die aus Polyäthylen besteht und eine Dicke von 2 mm besitzt. Unterhalb und seitlich derselben ist eine Tonschichte 2 mit einer durchschnittlichen Dicke von zumindest 60 cm vorgesehen. Unter der Folie 1 und der Tonschichte 2 sind Absaugrohre 3 angeordnet, die zur Anzeige etwaig aus dem Becken 4 austretender Flüssigkeit dienen. Am Boden 5 des Beckens 4 ist eine Kiesschichte 6 angeordnet, in welcher Leitungen 7 zur Absaugung des Wassers vorgesehen sind. Diese Leitungen weisen Perforationen entlang ihrer Erzeugenden auf, so daß entlang des gesamten Bodens 5 des Beckens 4 das Wasser abgesaugt werden kann. Oberhalb der Kiesschichte 6 ist eine weitere feinkörnige Schichte 8 angeordnet, in welcher Luftleitungen 9, die ebenfalls Perforationen aufweisen, angeordnet sind. Oberhalb dieser beiden Schichten 6 und 8, die jeweils ca. 25 cm Mächtigkeit aufweisen, ist die abgelagerte Suspension 10, u. zw. in einer Mächtigkeit von ca. 300 cm angeordnet. Auf der Wasseroberfläche 11 schwimmt ein Floß 12, das über nicht dargestellte Seilzüge entlang der Oberfläche gezogen werden kann. Am Floß 12 ist eine Luftinjektionseinrichtung 13 und eine Schlammpumpe 14 vorgesehen. Die Luftinjektionseinrichtung 13 weist einen Windkessel mit 150 1 Inhalt auf, in welcher Luft auf 10 bar verdichtet gespeichert wird und im Laufe von einer Sekunde strahlenförmig an den Boden abgegeben wird. Das Ventil öffnet selbsttätig, wenn ein Druck von 10 bar erreicht ist. Derartige Luftinjektionseinrichtungen sind aus der Silotechnik, z. B. zum Ablösen von Getreidekörnerhaufen von der Silowandung, bekannt. Die Schlammpumpe 14 saugt im Oberflächenbereich den durch die Luftinjektionseinrichtung aufgewirbelten Schlamm an und preßt ihn in die Suspension 10 zurück. Die Oberflächenabzugseinrichtung 15 weist einen Schlauch 16 auf, der hydrophob ausgebildet ist und in seiner Bewegung auf der Wasseroberfläche 11 die aufschwimmende hydrophobe Fraktion aufnimmt. Zwischen zwei Walzen 17 wird der Schlauch ausgequetscht und die hydrophobe Phase, in der Regel Erdöl, über die Leitung 18 einem Zwischenbehälter zugeführt. Nach dem Zwischenbehälter wird die abgesaugte Flüssigkeit einem Scheidegefäß eingeleitet, in welchem eine weitere Trennung zwischen der oleophilen Phasc und der hydrophilen Phasc durchgeführt wird. Die oleophile Phase wird sodann der in einer Raffinerie üblichen weiteren Behandlung zugeführt. Ein derartiges Becken weist üblicherweise ein Aufnahmevermögen von beispielsweise 15.000 m³ auf, wobei, wie bereits ausgeführt, die Mächtigkeit der Schlamm- bzw. Suspensionsschicht ca. 300 cm und die der Wasserschicht ca. 100 cm beträgt.

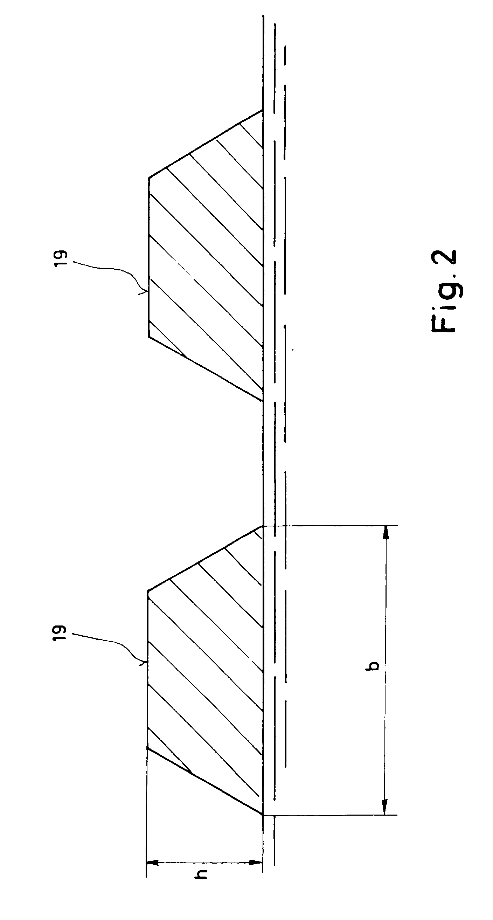

In Fig. 2 sind Mieten 19 aus der vom Erdöl abgereicherten Suspension dargestellt, die bereits krümelige Konsistenz aufweist, in welcher Stroh und Rinde eingemischt sind. Diese Mieten weisen eine Breite b von 300 cm und Höhe h von 170 cm auf. Falls erwünscht, können in diesen Mieten leicht verrottbare Substanzen, wie Grünschnitt aus der Landwirtschaft, Parks, wie Gras, Sträucher, angeordnet werden, um eine Temperaturerhöhung für weitere Fermentationen zu erreichen. Die Mieten sind derartig angeordnet, daß die herkömmlichen Wender zum Einsatz gelangen können.

### Beispiel 1:

In das Becken gemäß Fig. 1 wurden 10.000 m³ einer Suspension mit folgender Zusammensetzung eingebracht:
18,0 Gew.-% Erdöl (2.135,2 t)
30,0 Gew.-% Gesteinsmehl (3.558,6 t)
52,0 Gew.-% Wasser (6.170,0 t).

Diese Mischung wurde sodann mit ca. 3.000 m³ Wasser eines benachbarten Beckens, aus dem das Wasser abgezogen wurde, überschichtet.

In der Suspensionsschichte fand während der Lagerung eine geringfügige anaerobe Fermentation statt, wobei im Laufe von zehn Jahren ca. 390 t an Erdöl abgezogen werden konnte. Nach Abzug des Wassers wurde die Suspcnsion auf der Böschung des Beckens gelagert und wies folgende Zusammensetzung auf:
15,2 Gcw.-% Erdöl
31,0 Gew.-% Gesteinsmehl
53,8 Gew.-% Wasser.

Im Laufe von zehn Jahren wurden lediglich ca. 20 Gew.-% des in der Suspension vorliegenden Erdöls abgeschieden.

### Beispiel 2:

In einem analog zu dem im Beispiel 1 ausgeführten Becken gleicher Größc und Ausdehnung wurden 10.000 m³ einer Suspension gemäß Beispiel 1 eingebracht. Dieser Schlamm wurde anschließend mit 3.000 m³ Wasser überschichtet. Sodann wurde über das Becken, das ein Oberflächenmaß von 25 m x 120 m aufwies, ein Floß gezogen, auf dem eine Luftinjektionseinrichtung und eine Schlammpumpe angeordnet war. Die Luftinjektionseinrichtung wurde in Querrichtung des Beckens mit einer Geschwindigkeit von 2 m pro Minute hin- und zurückbewegt, wobei während der impulsartigen Injektion der Luft 1 m³/Minute mit einem Druck von 10 bar eine intensive Durchmischung des Wassers mit der am Boden abgelagerten Suspension stattgefunden hat. Während der Lagerung der Suspension im Becken hat weiters eine Zuleitung von Luft durch die am Boden liegenden Luftleitungen in einer Menge von 60 m³ pro m² und Stunde stattgefunden. Die Luft war auf 40° C bis 50° C erwärmt. Die an die Wasseroberfläche aufschwimmende Suspension wurde von der Umwälzpumpe gemeinsam mit Luft in die Suspcnsion rückgeführt.

In 60 Tagen wurden an der Oberfläche 1.801 t Erdöl abgezogen. Es wurde sodann das über der Suspension stehende Wasser durch die unterhalb derselben angeordneten Leitungen abgezogen und einer Trocknung durch Zuleiten von Luft, insbesondere auf 40° C bis 50° C erwärmter Luft unterworfen. Die so erhaltene vorgetrocknete Suspension wies folgende Zusammensetzung auf:
6,0 Gew.-% Erdöl
64,0 Gew.-% Gesteinsmehl
30,0 Gew.-% Wasser.

Diese Suspension wurde mit ca. 1 Gew.-% Stroh und ca. 4 Gew.-% Grünschnitt von Sträuchern vermischt. Im Grünschnitt waren auch Holzschnitzel von Bohrplatten, die Mikroorganismen aufwiesen, zugemischt. Derartige Platten aus Holz sind bei Bohrlöchern im Einsatz. Diese so erhaltene Mischung wies nun folgende Zusammensetzung auf:
5,70 Gew.-% Erdöl
60,95 Gew.-% Gesteinsmehl
28,55 Gew.-% Wasser
0,95 Gew.-% Stroh
3,85 Gew.-% Grünschnitt.

Diese Mischung, welche anfänglich noch sehr fließfähig war, wurde über die Zeit krümelig, wurde in Mieten mit einer Abmessung von 300 m Breite und 170 m Höhe abgelagert. Nach fünf Wochen wies die Mischung folgende Zusammensetzung auf:
2,4 Gew.-% Erdöl
69,5 Gew.-% Gesteinsmehl
25,2 Gew.-% Wasser
2,9 Gew.-% Stroh und Grünschnitt.

Während der Fermentation wurde die Mischung in Abstand von drei Tagen umgesetzt, womit eine Homogenisierung und Belüftung erfolgte.

Es wurde noch elf weitere Monate fermentiert, wobei ein Umsetzen der Mieten nur mehr im Wochenabstand und eine Befeuchtung für ca. 15 Gew-% Wasser, je nach Erfordernis, durchgeführt wurde. Die Mischung wies sodann folgende Zusammensetzung auf:
0,8 Gew.-% Erdöl
84,8 Gew.-% Gesteinsmehl
15,4 Gew.-% Wasser.

Es wurden somit ca. 98,5 Gew.-% des Erdöls wiedergewonnen bzw. in Mikroorganismen und Kohlendioxid umgewandelt.

Bei zu geringem Stickstoff sowohl im Schlamm als auch in den Mieten können weitere Nährstoffe zugesetzt werden.

Der Erdölgehalt in den jeweiligen Fraktionen wurde durch Extraktion mit n-llcptan ermittelt. Der Anteil an Sedimentstoff wurde durch Filtration und anschließenden Glühen der Rückstandsstoff unter Sauerstoffeinfluß bei 650° C bestimmt. Bei dieser Temperatur sind somit auch die Mikroorganismen als auch das Stroh und der Grünschnitt oxidiert. Grünschnitt und Stroh wurden durch Filtration ermittelt, wobei der Porendurchmesser der Filter so bemessen war, daß neben dem Erdöl sowie das Wasser und die Sedimente ebenfalls in das Filtrat gelangt sind.

Anstelle von Luft können auch andere Gase, z. B. wie sie bei der Verbrennung anfallen, aber auch mit Sauerstoff angereicherte Luft zum Einsatz kommen.

Obwohl ein Rühren der Suspcnsion durch Gasstrahlen für eine besonders intensive Durchmischung der Suspension mit dem Wasser Sorge tragen kann und gleichzeitig eine Vereinigung der olephilen Tröpfchen erleichtert, sind andere Rühreinrichtungen, beispielsweise mechanische Rührer, aber auch Mammutpumpen, mit welchen die Suspension vom Boden abgesaugt und dem Becken wieder zugeführt wird, einsetzbar.

Obwohl die Erfindung anhand von Erdölprodukten erläutert wurde, ist dieselbe auch für andere oleophile Substanzen geeignet, die mit einem Feststoff und einer wäßrigen Phase, in der Regel Wasscr, in Mischung vorliegen. Voraussetzung für den Einsatz des erfindungsgemäßen Verfahrens ist, daß die Suspension eine hohe Viskosität aufweist, so daß ein Zusammenschluß der oleophilen Tröpfchen nur schwer stattfinden kann. Als Beispiele für derartige oleophile Substanzen können Leinöl und Ernußöl angeführt werden. Für die Sedimente können beispielsweise Ruße, Kreide, Ton, feste Ionenaustauscher und Pulver mehr genannt sein.

## Patentansprüche

1. Verfahren zum Abtrennen einer hydrophoben flüssigen Fraktion, insbesondere Erdöl oder Erdöldestillate, aus einer wäßrigen Suspension mit einem Gehalt an der hydrophoben flüssigen Fraktion von 10 Gew.-% bis 40 Gew.-%, insbesondere 15 Gew.-% bis 25 Gew.-%, gegebenenfalls 18 Gew.-% bis 22 Gcw.-% und einer Sedimentfraktion, z. B. Gesteinsmehl von 25 Gew.-% bis 40 Gew.-%, wobei die wäßrige Suspension, gegebenenfalls unter Zusatz von Wasser, in einem Behälter, insbesondere einem Becken, gelagert, und von der Wasseroberfläche die hydrophobe flüssige Fraktion abgezogen wird, und der wäßrigen Suspension Wasser entzogen wird, dadurch gekennzeichnet, daß die Suspension im Behälter wiederholt mit Wasser vermischt wird, und an der Wasseroberfläche die hydrophobe flüssige Fraktion abgezogen wird, worauf der einen geringeren Anteil an der hydrophoben flüssigen Fraktion aufweisenden Suspension Wasser entzogen wird.

2. Verfahren nach Anspruch 1, dadurch gekennzeichnet, daß das Vermischen der Suspcnsion mit dem Wasser mit Gas-, insbesondere Luftstrahlen, erfolgt.

3. Verfahren nach Anspruch 1 oder 2, dadurch gekennzeichnet, daß das Gas, insbesondere die Luft, in die Suspension impulsartig, vorzugsweise mit einem Druck von 5 bar bis 10 bar, in einer Dauer insbesondere von 1 bis 5 Sekunden eingeleitet wird.

4. Verfahren nach Anspruch 1, 2 oder 3, dadurch gekennzeichnet, daß das Gas, insbesondere die Luft, über Gasleitungen, die in und/oder unterhalb der Suspension angeordnet sind, eingeleitet wird.

5. Verfahren nach einem der Ansprüchc 1 bis 4, dadurch gekennzeichnet, daß das Gas, insbesondere die Luft, vor dem Einleiten, insbesondere auf 40° C bis 50° C, erwärmt wird.

6. Verfahren nach einem der Ansprüchc 1 bis 5, dadurch gekennzeichnet, daß das Gas, insbesondere die Luft, über entlang der Wasseroberfläche geführten Träger, vorzugsweise Flöße, in die Suspension eingeleitet wird.

7. Verfahren nach einem der Ansprüche 1 bis 6, dadurch gekennzeichnet, daß an die Wasseroberfläche aufschwimmende Suspension in die am Boden des Behälters vorliegende Suspension, z. B. über eine Schlammpumpe, gegebenenfalls gemeinsam mit Luft, rückgeführt wird.

8. Verfahren nach einem der Ansprüche 1 bis 7, dadurch gekennzeichnet, daß nach beendeter Abtrennung der hydrophoben flüssigen Fraktion das Wasser, insbesondere über unterhalb der Suspension angeordneten Flüssigkeitsleitungen, abgezogen wird.

9. Verfahren nach einem der Ansprüche 1 bis 8, dadurch gekennzeichnet, daß die Suspension, von welcher Wasser abgezogen wurde, zu Mieten aufgelegt wird, welche, insbesondere mechanisch, gewendet werden.

10. Verfahren nach einem der Ansprüchc 1 bis 9, dadurch gekennzeichnet, daß die Suspension, von welcher Wasser abgezogen wurde, mit strukturierenden Materialien, z. B. Stroh oder Rinden, vermischt wird.

11. Verfahren nach einem der Ansprüche 1 bis 10, dadurch gekennzeichnet, daß die Suspension mit Mikroorganismen, insbesondere Trägersubstraten von Mikroorganismen, z. B. hölzerne Bohrplatten, vermischt wird, welche die flüssige hydrophobe Fraktion abbauen.

12. Verfahren nach einem der Ansprüche 1 bis 11, dadurch gekennzeichnet, daß die Suspension mit Grünschnitt, z. B. von Gras, Sträuchern, vermischt wird.

13. Verfahren nach einem der Ansprüche 1 bis 12, dadurch gekennzeichnet, daß der Suspension Stickstoffquellen zugeführt werden.

14. Vorrichtung zum Abtrennen einer hydrophoben flüssigen Fraktion, insbesondere Erdöl oder Erdöldestillate, aus einer wäßrigen Suspension, insbesondere nach einem der Ansprüche 1 bis 13, mit einem Behälter, der zumindest eine wasserdichte Schichte, z. B. mit Lehm oder Kunststoff, aufweist, welche eine Beschichtung mit Schotter und/oder Kies trägt und eine Oberflächenschichtabzugseinrichtung für die Wasseroberflächenschichte und/oder einer auf dieser schwimmenden Schicht aufweist, dadurch gekennzeichnet, daß im Schotter und/oder Kies eine Flüssigkeitsabzugsleitung und/oder eine Gaszuführleitung angeordnet ist.

15. Vorrichtung nach Anspruch 14, dadurch gekennzeichnet, daß ein Floß vorgesehen ist, welches entlang der Wasseroberfläche bewegbar ist und eine Gasinjektionseinrichtung und/oder eine Schlammpumpeinrichtung trägt.

16. Vorrichtung nach Anspruch 14 oder 15, dadurch gekennzeichnet, daß die Gasinjektionseinrichtung einen Druckkessel für das Gas aufweist.

17. Vorrichtung nach Anspruch 14, 15 oder 16, dadurch gekennzeichnet, daß die Schlammpumpeinrichtung eine Absaugung aufweist, die wasseroberflächennahe mündet.

## Claims

1. Process for separating out a hydrophobic liquid fraction, more specifically crude oil or crude oil distillate from an aqueous suspension having a content of the hydrophobic liquid fraction of from 10 wt. % to 40 wt.%, more specifically 15 wt.% to 25 wt.%, if necessary 18 wt.% to 22 wt.%, and a sediment fraction, for example, rock dust of from 25 wt.% to 40 wt.%, wherein the aqueous suspension, if necessary with the addition of water, is stored in a container, more specifically a basin, and the hydrophobic liquid fraction is drawn off from the water surface, and water is removed from the aqueous suspension, characterised in that the suspension in the container is repeatedly mixed with water and the hydrophobic liquid fraction is drawn off at the water surface, after which water is removed from the suspension which comprises a smaller proportion of the hydrophobic liquid fraction.

2. Process according to claim 1, characterised in that the process of mixing the suspension with the water is performed with gas jets, more specifically air jets.

3. Process according to claim 1 or 2, characterised in that the gas, more specifically the air, is introduced into the suspension in a pulsated manner, preferably at a pressure of from 5 bar to 10 bar for a period lasting in particular from 1 to 5 seconds.

4. Process according to claim 1, 2 or 3, characterised in that the gas, more specifically the air, is introduced via gas lines which are arranged in and/or below the suspension.

5. Process according to any one of claims 1 to 4, characterised in that the gas, more specifically the air, is heated, more specifically to 40°C to 50°C prior to being introduced.

6. Process according to any one of claims 1 to 5, characterised in that the gas, more specifically the air, is introduced into the suspension via carriers, preferably floats, which are guided along the water surface.

7. Process according to any one of claims 1 to 6, characterised in that the suspension which rises to the water surface is returned to the suspension lying at the base of the container, for example by way of a sludge pump, if necessary together with air.

8. Process according to any one of claims 1 to 7, characterised in that once the separation of the hydrophobic liquid fraction is complete the water is drawn off, more specifically via liquid lines arranged below the suspension.

9. Process according to any one of claims 1 to 8, characterised in that the suspension from which water has been drawn off is applied to pits, which are revolved more specifically in a mechanical manner.

10. Process according to any one of claims 1 to 9, characterised in that the suspension from which water has been drawn off is mixed with structuring materials, for example, straw or peel.

11. Process according to any one of claims 1 to 10, characterised in that the suspension is mixed with micro-organisms, more specifically carrier substrates of micro-organisms, for example wooden bore plates, which decompose the liquid hydrophobic fraction.

12. Process according to any one of claims 1 to 11, characterised in that the suspension is mixed with plant cuttings, for example, from grass, shrubs.

13. Process according to any one of claims 1 to 12, characterised in that the sources of nitrogen are added to the suspension.

14. Apparatus for separating out a hydrophobic liquid fraction, more specifically crude oil or crude oil distillate from an aqueous suspension, more specifically according to any one of claims 1 to 13, having a container, which comprises at least one water-tight layer, for example with loam or synthetic material, which has a coating of broken stones and/or pebble stones and comprises a surface layer removing device for the water surface layer and/or a layer floating thereon, characterised in that a liquid-removing line and/or a gas supply line is arranged in the broken stones and/or the pebble stones

15. Apparatus according to claim 14, characterised in that a float is provided which can move along the water surface and which carries a gas injecting device and/or a sludge pumping device.

16. Apparatus according to claim 14 or 15, characterised in that the gas injecting device comprises a pressure tank for the gas.

17. Apparatus according to claim 14, 15 or 16, characterised in that the sludge pumping device comprises a suction system which issues in the proximity of the water surface.

## Revendications

1. Procédé permettant de séparer une fraction liquide hydrophobe, en particulier du pétrole ou un distillat de pétrole, d'une suspension aqueuse contenant de 10 à 40 % en poids, en particulier de 15 à 25 % en poids, et plus spécialement de 18 à 22 % en poids de cette fraction liquide hydrophobe, ainsi que de 25 à 40 % en poids d'une fraction de sédiments, par exemple de la poussière de roche, dans lequel procédé l'on place la suspension aqueuse, en y ajoutant éventuellement de l'eau, dans un récipient, en particulier dans un bassin, l'on enlève la fraction liquide hydrophobe de la surface de l'eau et l'on élimine de l'eau de la suspension aqueuse, procédé caractérisé en ce qu'on mélange de façon répétée la suspension avec de l'eau, dans le récipient, et l'on enlève la fraction liquide hydrophobe de la surface de l'eau, après quoi l'on élimine de l'eau de la suspension qui contient moins de fraction liquide hydrophobe.

2. Procédé conforme à la revendication 1, caractérisé en ce qu'on mélange la suspension avec de l'eau à l'aide de jets de gaz, en particulier de jets d'air.

3. Procédé conforme à la revendication 1 ou 2, caractérisé en ce qu'on envoie le gaz, en particulier de l'air, dans la suspension, par impulsions d'une durée valant en particulier de 1 à 5 secondes, et de préférence sous une pression de 5 à 10 bars.

4. Procédé conforme à la revendication 1, 2 ou 3, caractérisé en ce qu'on envoie le gaz, en particulier de l'air, en le faisant passer par des canalisations de gaz disposées dans et/ou au-dessous de la suspension.

5. Procédé conforme à l'une des revendications 1 à 4, caractérisé en ce qu'on réchauffe, en particulier à une température de 40 à 50 °C, le gaz, en particulier de l'air, avant de l'envoyer dans la suspension.

6. Procédé conforme à l'une des revendications 1 à 5, caractérisé en ce qu'on envoie le gaz, en particulier de l'air, dans la suspension, en le faisant passer par des porteurs, de préférence des radeaux, qu'on déplace à la surface de l'eau.

7. Procédé conforme à l'une des revendications 1 à 6, caractérisé en ce qu'on renvoie, le cas échéant conjointement avec de l'air, de la suspension qui surnage au niveau de la surface de l'eau dans la suspension qui se trouve au fond du récipient, par exemple au moyen d'une pompe à boue.

8. Procédé conforme à l'une des revendications 1 à 7, caractérisé en ce que, une fois terminée la séparation de la fraction liquide hydrophobe, on draine l'eau, en particulier en la faisant passer par des canalisations pour liquide disposées au-dessous de la suspension.

9. Procédé conforme à l'une des revendications 1 à 8, caractérisé en ce qu'on fait de la suspension, dont on a enlevé l'eau, des tas qui seront retournés, en particulier mécaniquement.

10. Procédé conforme à l'une des revendications 1 à 9, caractérisé en ce qu'on mélange la suspension, dont on a enlevé l'eau, avec des matériaux structurants, par exemple de la paille ou des morceaux d'écorce.

11. Procédé conforme à l'une des revendications 1 à 10, caractérisé en ce qu'on mélange la suspension avec des microorganismes, en particulier des substrats, par exemple des plaques trouées en bois, supportant des microorganismes qui dégradent la fraction liquide hydrophobe.

12. Procédé conforme à l'une des revendications 1 à 11, caractérisé en ce qu'on mélange la suspension avec des matériaux provenant de la coupe ou de la taille de végétaux verts, par exemple d'herbe ou d'arbrisseaux.

13. Procédé conforme à l'une des revendications 1 à 12, caractérisé en ce qu'on ajoute des sources d'azote à la suspension.

14. Installation permettant de séparer une fraction liquide hydrophobe, en particulier du pétrole ou un distillat de pétrole, d'une suspension aqueuse, en particulier selon un procédé conforme à l'une des revendications 1 à 13, laquelle installation comporte un récipient muni d'au moins une couche étanche à l'eau, par exemple en argile ou en matière plastique, portant un revêtement de cailloux et/ou de graviers, et d'un dispositif d'élimination de couches superficielles destiné à enlever la couche d'eau superficielle et/ou une couche qui surnage sur celle-ci, laquelle installation est caractérisée en ce qu'il y a, au sein des cailloux et/ou graviers, une canalisation de drainage de liquide et/ou une canalisation d'arrivée de gaz.

15. Installation conforme à la revendication 14, caractérisée en ce qu'elle comporte un radeau qu'on peut déplacer à la surface de l'eau et qui porte un dispositif d'injection de gaz et/ou un dispositif de pompage de boues.

16. Installation conforme à la revendication 14 ou 15, caractérisée en ce que le dispositif d'injection de gaz comporte un réservoir de gaz sous pression.

17. Installation conforme à la revendication 14, 15 ou 16, caractérisée en ce que le dispositif de pompage de boues comporte un orifice d'aspiration qui s'ouvre à proximité de la surface de l'eau.
